# EUROPÄISCHE PATENTSCHRIFT

(11) **EP 1 630 383 B1**
(45) Veröffentlichungstag und Bekanntmachung des Hinweises auf die Patenterteilung: **15.10.2008**
(21) Anmeldenummer: 05016146.2
(22) Anmeldetag: 26.07.2005
(51) Int. Cl.: F02B 31/06, F02D 41/22, F02D 41/00, F02D 41/14

(54) **Verfahren zur Funktionsdiagnose mindestens einer Ladungsbewegungsklappe**
Method for the functional diagnosis of a charge moving flap
Méthode de diagnostic du fonctionnement d'un volet d'agitation

(30) Priorität: 27.08.2004 DE 102004042062
(43) Veröffentlichungstag der Anmeldung: 01.03.2006
(73) Patentinhaber: GM Global Technology Operations, Inc., Detroit, MI 48265-3000 (US)
(72) Erfinder: Bochen, Carolin, 65239 Hochheim (DE); Schellong, Michael, 65428 Rüsselsheim (DE); Vollstädt, Jens, 08491 Limbach (DE)
(74) Vertreter: Strauss, Peter

(56) Entgegenhaltungen:
- EP-A1- 1 205 651
- DE-A1- 10 257 566
- JP-A- 2001 020 782
- US-A- 5 231 964

## Beschreibung

Die Erfindung betrifft ein Verfahren zur Funktionsdiagnose mindestens einer Ladungsbewegungsklappe in einem Verbrennungsmotor eines Kraftfahrzeuges während des Betriebes des Verbrennungsmotors.

Ladungsbewegungsklappen werden bei Brennkraftmaschinen zur Steuerung der Gemischladung eines Zylinders häufig verwendet. Diese auch als Drallklappe bekannten Ladungsbewegungsklappen befinden sich stromab des Luftsammlers vor dem Einlassventil und beeinflussen die Einströmverhältnisse der Ansaugluft, beispielsweise in dem von zwei Einlasskanälen eines Zylinders einer mehr oder weniger verschlossen wird. Dadurch kann man beeinflussen, mit welchem Drall das angesaugte Gas in den Zylinder gelangt, woraus sich auch der Name "Drallklappe" erklärt. Jeder Zylinder verfügt über eine eigene Ladungsbewegungsklappe. Die Ladungsbewegungsklappen sind in der Regel durch ein Kuppelgestänge verbunden, das von einer Verstellvorrichtung betätigt wird, die gleichzeitig ein Lagerückmeldesignal abgibt, so dass ein Steuergerät Kenntnis über die aktuelle Lage der Drallklappen (Ladungsbewegungsklappen) hat. Dies ist nicht zuletzt deshalb notwendig, da viele bei modernen Brennkraftmaschinen zur Steuerung verwendeten Kennfelder auch die Stellung der Ladungsbewegungsklappe berücksichtigen. In der DE 198 60 323 A1 wird die Funktion der Drallklappenbetätigung beschrieben. Hierbei wird ein die Lage der Ladungsbewegungsklappe abfühlender Sensor verwendet, um die korrekte Funktion der Ladungsbewegungsklappe und dabei insbesondere die Aktivität der Verstellvorrichtung überprüfen zu können. Einer der Nachteile ist, das zur Kontrolle der Funktionsfähigkeit der Ladungsbewegungsklappe ein zusätzlicher Sensor benötigt wird, wodurch sich der Montageaufwand erhöht.

Es ist allgemein bekannt einen Reed-Sensor zur Überwachung der Stellung der Ladungsbewegungsklappe im Saugrohr einzusetzen. Dieser Reed-Sensor ist beispielsweise an einem Anschraubflansch am Saugrohr befestigt. Der Sensor ist in der Lage, zwei Endlagen sowie die Zwischenstellung der Ladungsbewegungsklappe mittels einer Widerstandsschaltung zu erkennen. Der Reed-Sensor beinhaltet ein Widerstandsnetzwerk, der mit Magneten arbeitet, die an dem Gestänge zur Betätigung der Ladungsbewegungsklappen angebracht sind. Während des Betriebes werden die Magneten an den jeweiligen Sensoren vorbei geführt, wodurch sich unterschiedliche Widerstände ergeben. Diese werden in die Motorstellung unmittelbar in die angegebenen Spannungen umgerechnet. Einer der Nachteile ist, dass der Reed-Sensor lediglich indirekt die Funktionsweise der Ladungsbewegungsklappe ermitteln kann, da der Sensor lediglich die Position des Mechanikteils, an dem die Ladungsbewegungsklappe befestigt ist, anzeigt und nicht die reale Ladungsbewegungsklappen-Stellung im Saugrohr erkennen kann. Des Weiteren sind zur Erkennung der Ladungsbewegungsklappenstellung mehrere Sensoren notwendig, wodurch der Energiebedarf des Kraftfahrzeuges steigt.

In der DE 102 57 566 A1 ist ein Verfahren zur Steuerung eines Verbrennungsmotors beschrieben, bei dem einer Motorsteuerung Motorparameter zugeführt werden und ein von einem Luftmassensensor erzeugtes Luftmassensignal der Motorsteuerung zugeführt wird. Hierbei wird eine Luftzufuhr zu einem Zylinder von einer Ladungsbewegungsklappe beeinflusst, wobei eine Stellung der Ladungsbewegungsklappe von der Motorsteuerung in Abhängigkeit des gemessenen Luftmassensignals selektiert wird. Anstelle eines Lagesensors wird bei dieser Erfindung über das gemessene Luftmassensignal auf die Funktionsweise der Ladungsbewegungsklappe geschlossen. Das gemessene Luftmassensignal wird der Motorsteuerung zugeführt. In der Motorsteuerung wird der Verlauf des Luftmassensignals überwacht. Beim Auftreffen von einem kurzzeitigen Ansteigen und einem anschließenden wieder Abfallen bzw. einem kurzzeitigen Abfallen mit sofortigem Wiederanstieg des Luftmassensignals erkennt die Motorsteuerung, dass die Ladungsbewegungsklappe geschaltet bzw. bewegt wurde. Dazu berechnet die Motorsteuerung den Anstieg des Luftmassensignals über die Zeit. Steigt das Luftmassensignal sprunghaft an bzw. ab und fällt sofort wieder ab bzw. steigt sofort wieder an, wurde die Ladungsbewegungsklappeneinstellung verändert. Somit kann eine Änderung der Ladungsbewegungsklappeneinstellung erkannt werden, ohne das etwaige Sensoren an der Ladungsbewegungsklappe angeordnet werden müssen. Einer der Nachteile ist jedoch, dass das Öffnen und Schließen der Ladungsbewegungsklappe insbesondere im Volllast- und Teillastbereich des Motors für den Autofahrer als störend empfunden werden kann. Des Weiteren hat sich gezeigt, dass die Luftmasse von etlichen Parametern beeinflusst wird, so dass in diesem Verfahren Fehldiagnosen möglich sind.

In der DE 100 01 583 A1 ist ein Verfahren zur Funktionsüberwachung eines Gasströmungsorgans, insbesondere einer Drallklappe, bei einer Brennkraftmaschine beschrieben. Hierbei wird die Motorlaufunruhe über ein Laufunruhesignal in einem quasi stationären Zustand erfasst. Durch die Ansteuerung des Gasströmungsorgans wird eine Stellungsänderung bewirkt. Das Motorlaufunruhesignal wird nach der Ansteuerung erfasst und zur Bildung eines zweiten genutzt. Daraus wird im Anschluss ein Kombinationssignal gebildet. Die Differenz zwischen den beiden Signalen wird gebildet und diese mit einem Schwellenwert verglichen. Eine Änderung der Zündwinkel in Abhängigkeit von der Ansteuerung des Gasströmungsorgans erfolgt vor der Erfassung der Laufunruhe. Alle Verfahrensschritte erfolgen hierbei zu vorgegebenen Zeitpunkten und nach bestimmten Zeitabschnitten.

In der DE 101 64 729 A1 ist ein Verfahren zur Funktionsdiagnose mindestens eines Ladungsbewegungselementes in einem Verbrennungsmotor eines Kraftfahrzeuges beim laufenden Verbrennungsmotor beschrieben, bei dem zunächst ein Ladungsbewegungselement in derart angesteuert wird, dass bei intaktem Ladungsbewegungselement eine Ladungsbewegung erzeugt würde, wobei das Ladungsbewegungselement mindestens ein Einlassventil umfasst, dass zum Erzeugen einer Ladungsbewegung aktiviert wird. Zur Erhöhung der Laufunruhe bei defektem Ladungsbewegungselement wird mindestens ein Zündwinkel in Richtung spät auf einen späten Zündwinkelwert eingestellt. Anschließend wird ein für eine Laufunruhe des Verbrennungsmotors charakteristischer Wert ermittelt und mit einem Sollwert verglichen, der einer Laufunruhe bei intaktem Ladungsbewegungselement entspricht, um ein mögliches Abweichen festzustellen. Einer der Nachteile der beiden letztgenannten Verfahren ist, dass diese lediglich oberhalb der Leerlaufdrehzahl des Motors eine zuverlässige Diagnose durchführen können.

US 523 1964 offenbart ein Verfahren zur Funktionsdiagnose einer Ladungsbewegungsklappe während des Betriebes des Verbrennungsmotors im Leerlaufbereich.

Der Erfindung liegt die Aufgabe zugrunde, ein Verfahren zur Funktionsdiagnose mindestens einer Ladungsbewegungsklappe zu schaffen, bei den die obengenannten Nachteile vermieden werden, insbesondere ein einfaches und kostengünstiges Verfahren bereitgestellt wird, mit dem unabhängig von der Verwendung von Stellungssensoren eine zuverlässige Steuerung des Verbrennungsmotors durch eine zuverlässige Erkennung der Ladungsbewegungsklappenstellung möglich ist.

Diese Aufgabe wird durch ein Verfahren mit den Merkmalen des Anspruches 1 gelöst. In den abhängigen Ansprüchen sind bevorzugte Weiterbildungen ausgeführt.

Dazu ist erfindungsgemäß vorgesehen, dass die für den Leerlaufbereich erforderliche Einspritzmenge derart reduziert wird, dass das Kraftstoff-Luftgemisch auf einen bestimmten Wert abgemagert ist. Zweckmäßigerweise wird während der Reduzierung der Einspritzmenge die Lamdaregelung abgeschaltet. Anschließend wird im Leerlaufbereich des Motors ein Basiswert der Laufunruhe des Motors gemessen. Die Ladungsbewegungsklappe(n) sind hierbei für eine Schließstellung angesteuert. Daraufhin wird die Ladungsbewegungsklappe für eine Offenstellung angesteuert. Im nächsten Schritt wird eine Messung eines Prüfwertes der Laufunruhe durchgeführt und anschließend dieser Prüfwert mit dem vorher ermittelten Basiswert verglichen, um eine mögliche Fehlfunktion der Ladungsbewegungsklappe zu detektieren. Vorteilhafterweise wird der Basiswert sowie der Prüfwert nach einer gewissen Einschwingzeit ermittelt.

Befindet sie sich das Kraftfahrzeug im Volllast-oder im Teillastbereich, insbesondere im oberen Teillastbereich wird ein Istwert eines dem Motor zugeführten Luftmassenstroms gemessen, wobei die Ladungsbewegungsklappe für eine Offenstellung angesteuert ist, und anschließend dieser ermittelte Istwert mit einem Sollwert verglichen, um eine mögliche Fehlfunktion der Ladungsbewegungsklappe zu detektieren. Vorzugsweise wird dieser Istwert ebenfalls - wie für den Leerlaufbereich - erst nach einer gewissen Einschwingzeit ermittelt. Der wesentliche Vorteil dieses Verfahren ist, dass eine Funktionsdiagnose einer oder mehrerer Ladungsbewegungsklappen im Kraftfahrzeug im Volllast- und Teillastbereich durchgeführt werden kann, ohne dass zusätzliche Sensoren notwendig sind, so dass mechanische und elektrische Bauteile eingespart werden können.

In einer bevorzugten Ausführungsform erfolgt der Vergleich des Basiswertes und des Prüfwertes im Leerlaufbereich des Motors, in dem die Differenz zwischen diesen beiden Werten ermittelt wird und somit ein Laufunruhedifferenzwert gebildet wird. Wenn der Laufunruhedifferenzwert ungefähr gleich 0 ist, wird ein Fehler detektiert. Unter gleich 0 ist hierbei zu verstehen, dass der Laufunruhedifferenzwert in einem bestimmten Toleranzbereich zwischen 0 liegt, damit für das System ein Fehler vorliegt. Dieser Toleranzbereich ist je nach Bedingungen des Verbrennungsmotors unterschiedlich groß auszulegen.

Zweckmäßigerweise wird der ermittelte Laufunruhedifferenzwert mit einem Laufunruheschwellenwert verglichen, wobei kein Fehler detektiert wird, wenn der Laufunruhedifferenzwert größer als der Laufunruheschwellenwert ist.

In einer bevorzugten Ausführungsform des Verfahrens erfolgt der Vergleich des Istwertes mit dem Sollwert im Volllast- und im Teillastbereich des Motors, in dem der Sollwert einen Toleranzbereich aufweist und erst dann ein Fehler detektiert wird, wenn der Istwert nicht innerhalb des Sollwerttoleranzbereiches liegt. Dieser Toleranzbereich ist in Abhängigkeit vom Motor und anderen Randbedingungen individuell einzustellen. Einer der wesentlichen Vorteile ist, dass im Volllast- und im Teillastbereich eine zuverlässige Diagnose der Ladungsbewegungsklappen durchgeführt werden kann, ohne das zusätzliche Sensoren notwendig sind, so dass mechanische und elektrische Bauteile eingespart werden können.

Zweckmäßigerweise erfolgen die Schritte f) und g) des Patentanspruches 1 kontinuierlich, wobei Einschaltbedingungen für den Volllast- und den Teillastbereich erfüllt sein müssen. Während sich das Kraftfahrzeug im Volllast- oder Teillastbereich befindet, wird ohne Unterbrechung die Funktionsdiagnose durchgeführt. Zur Durchführung des erfindungsgemäßen Verfahren im Volllast- oder Teillastbereich müssen jedoch gewisse Einschaltbedingungen erfüllt sein. Erst wenn diese Einschaltbedingungen positiv vorliegen, kann eine Diagnose bei dem jeweiligen aktuellen Bereichspunkt durchgeführt werden.

Eine der Einschaltbedingungen kann beispielsweise die aktuelle Motorlast sein, die vorliegen muss, um eine Volllast- oder Teillastdiagnose (im folgenden nur als Volllastdiagnose bezeichnet) zu starten. Es hat sich gezeigt, dass ab einer Motorlast von ungefähr 55 bis 60% die Einschaltbedingungen erfüllt sind.

Eine weitere Einschaltbedingung kann an die aktuelle Motordrehzahl gekoppelt sein. Ab einer Motordrehzahl von ca. 3500-4000 Umdrehungen pro Minute erfolgt eine Freigabe für den Diagnosedurchlauf nach den Schritten f) und g) gemäß des Anspruches 1.

Die Fahrzeuggeschwindigkeit kann ebenfalls als eine Einschaltbedingung vorliegen. Zweckmäßigerweise erfolgt ein Diagnosedurchlauf, wenn die Kraftfahrzeuggeschwindigkeit größer als 0 ist.

Eine weitere wichtige Einschaltbedingung ist die Motortemperatur. Ab ungefähr 70°C bis 80°C Motortemperatur kann eine Freigabe für die Diagnose der Ladungsbewegungsklappenstellung erfolgen.

Der jeweils eingelegte Gang kann ebenfalls als Bedingung für den Start des Diagnoselaufes hinzugenommen werden. Es kann beispielsweise festgelegt werden, dass ab dem zweiten Gang die Diagnoseschritte f) und g) des Patentanspruches 1 durchlaufen werden können. Es hat sich gezeigt, dass der erste Gang nicht besonders für einen Diagnoselauf geeignet ist, aufgrund negativ wirkender dynamischer Einflüsse während der Luftfüllung.

Der aktuell gemessene Luftmassenstrom kann ebenfalls als Einschaltbedingung herangezogen werden, so dass ab einem bestimmten Wert des Luftmassenstromes eine obengenannte Diagnose stattfinden kann.

Bei einer Ausführungsform der Erfindung können alle genannten Einschaltbedingungen gleichzeitig verwendet werden, wobei eine Diagnose erst dann gestartet wird, wenn alle Bedingungen erfüllt sind. In einer weiteren Alternative der Erfindung ist es möglich lediglich eine oder mehrere Einschaltbedingungen zu verwenden.

In einer weiteren Alternative werden die Schritte a) bis e) des Patentanspruches 1 diskontinuierlich für den Leerlaufbereich durchgeführt, wobei gewisse Einschaltbedingungen für den Leerlaufbereich erfüllt sein müssen. Eine Einschaltbedingung für den Start eines Diagnoselaufes im Leerlaufbereich kann beispielsweise die aktuelle Fahrzeuggeschwindigkeit sein. Vorzugsweise sollte die Fahrzeuggeschwindigkeit bei der vorliegenden Erfindung 0 sein, so dass der Motor sich im Leerlauf befindet.

Um ein zufriedenstellendes Ergebnis der Diagnose zu erzielen, sollte die Motortemperatur einen bestimmten Wert aufweisen, der vorzugsweise größer als 70°C bis 80°C sein soll.

Eine weitere Einschaltbedingung kann beispielsweise die aktuelle Motordrehzahl sein.

Des Weiteren kann die Tankentlüftungsaktivierung eine Bedingung für den Diagnoselauf sein, die vorzugsweise nicht aktiv sein darf, um daraus resultierende Gemischeinflüsse auszuschließen.

Diese genannten Einschaltbedingungen können jeweils einzeln für den Start eines Diagnoselaufes im Leerlaufbereich eingesetzt werden als auch in beliebiger Kombination (siehe Einschaltbedingungen für die Volllastdiagnose).

Die Leerlaufdiagnose kann beispielsweise nach einer festgelegten Anzahl an Leerlaufzyklen erfolgen. Bei einer weiteren Alternative kann die Leerlaufdiagnose nach einer bestimmten Zeit durchgeführt werden, auch wenn in der Zeit nach dem Motorstart noch nicht die festgelegte Anzahl der Leerlaufzyklen erreicht wurde, nach denen es zu einem Diagnosedurchlauf kommen soll. Auf diese Weise soll sichergestellt werden, dass bei längeren Fahrten ohne Leerlaufphase die Diagnose, ohne zu lange auszusetzen, durchlaufen kann, sobald es die Umstände zulassen. In einer weiteren Alternative kann es sinnvoll sein sofort nach einem zuvor diagnostizierten Fehler die Leerlaufdiagnose, falls die Einschaltbedingungen erfüllt sind, durchzuführen.

Bei einer bevorzugten Ausführungsform wird der Luftmassenstrom im Schritt f) durch einen Durchflussmesser ermittelt, der beispielsweise ein Volumendurchflussmesser, ein Staudruckdurchflussmesser oder ein Massendurchflussmesser sein kann. In einer bevorzugten Alternative ist der Massendurchflussmesser als ein Heißfilm-Luftmassen-Durchflussmesser ausgebildet, der zwischen dem Filter und der Drosselklappe des Motors angeordnet ist. Alternativ kann bei einem druckgeführten Ansaugsystem (z.B. mittels Saugrohr - Drucksensor) der aktuelle Luftmassenstrom, bezogen auf die in diesem Fall vorhandene Eingangs- bzw. Messgröße, durch einen Rechenalgorithmus der Motorsteuerung hergeleitet werden.

Um ein zuverlässiges Ergebnis bei der Diagnose im Leerlaufbereich zu erhalten, sollte die Einspritzmenge so weit reduziert werden, dass ein dem Motor zugeführtes Kraftstoff-Luftgemisch von ungefähr λ=1,08 bis λ=1,2 entsteht.

Vorzugsweise sind Basiswert, Prüfwert und der Istwert jeweils gemittelte Werte. Zweckmäßigerweise sind die gemittelten Werte durch einen bestimmten Wert korrigiert.

Bei der vorliegenden Erfindung wird die Laufunruhe im Leerlaufbereich des Motors über die Änderung der Kurbelwellenbeschleunigung ermittelt. Wie bereits oben erläutert wird mittels der Laufunruhe festgestellt, ob die Verbrennung in allen Zylindern mit gleichguter Qualität abläuft. Ist dies nicht der Fall, treten Drehungleichförmigkeiten an der Kurbelwelle auf, die beim Überschreiten definierten Grenzen das Vorhanden sein von Verbrennungsaussetzern anzeigen. Aufgrund der Schritte a) bis e) werden künstlich derartige Drehungsgleichförmigkeiten erzeugt, worauf auf eine mögliche Fehlfunktion der Ladungsbewegungsklappen geschlossen werden kann.

Es ist selbstverständlich möglich, das beschriebene Verfahren innerhalb einer Steuereinheit zu integrieren, welche das Diagnoseverfahren durchführt.

Das erfindungsgemäße Verfahren kann in einem Programm aufgezeichnet werden, das in einem Computer als lesbares Aufzeichnungsmedium gespeichert ist. Das Programm wird hierbei vorzugsweise auf einem magnetischen Aufzeichnungsmedium wie einer Floppy-Disk aufgezeichnet oder auf einem optischen Aufzeichnungsmedium wie einer CD-ROM, CR-R (Compact Disk recordable), einem Blitzspeicher (Flash Memory) oder dergleichen. Durch den Einsatz des Aufzeichnungsmediums mit hierauf aufgezeichnetem Programm lässt sich das Programm bei einer Vielzahl von Steuereinheiten durch das Aufzeichnungsmedium installieren, wodurch die Anwendbarkeit des Verfahrens verbessert wird. Ferner ist es ebenfalls denkbar, dass das Programm in einem Computernetzwerk installiert ist und ein Housecomputer in dem Computernetzwerk die tatsächliche Steuerung durchführt.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: einen schematischen Ablauf der Volllastdiagnose,

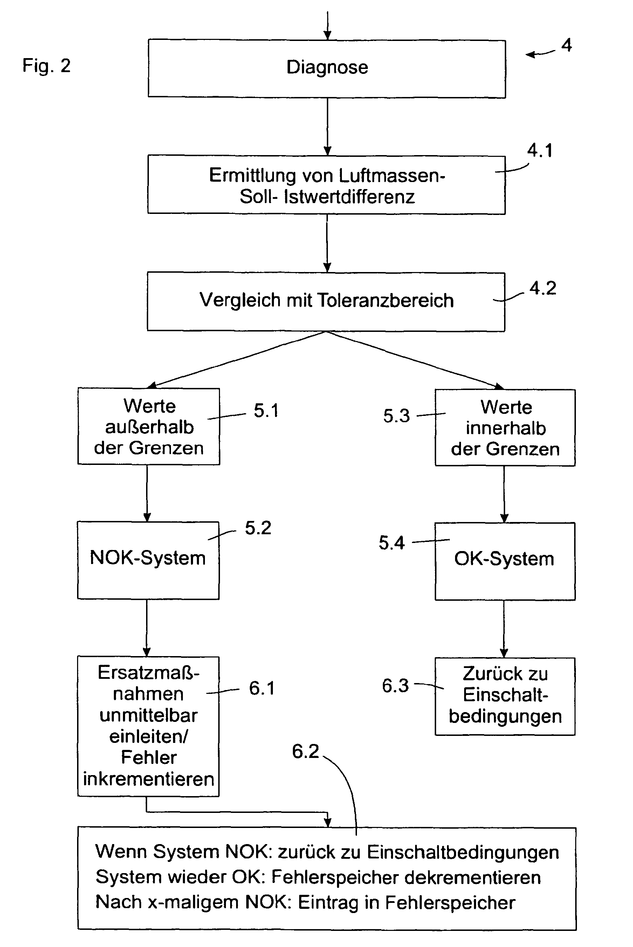

- Fig. 2: einen detaillierten Ablauf der Volllastdiagnose gemäß Figur 1,
- Fig. 3: einen schematischen Ablauf der Leerlaufdiagnose und
- Fig. 4: einen detaillierten Ablauf der Leerlaufdiagnose gemäß Figur 3.

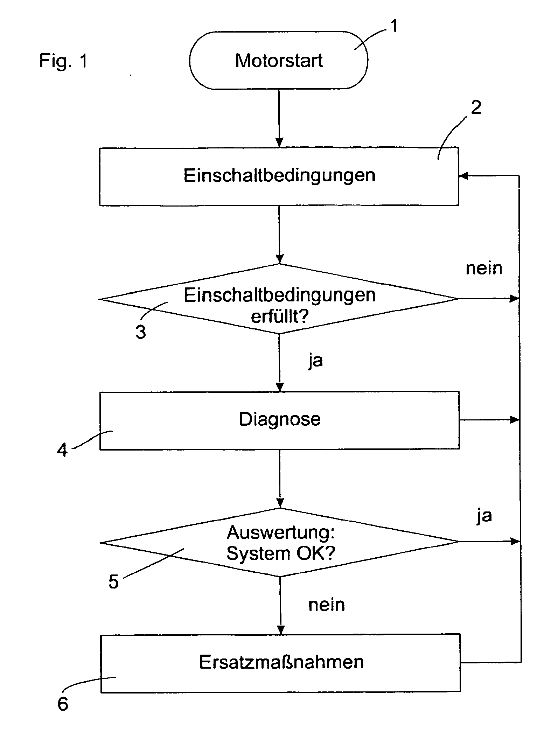

Gemäß der Figur 1 wird das erfindungsgemäße Verfahren zur Funktionsdiagnose mindestens einer Ladungsbewegungsklappe in einem Verbrennungsmotor eines Kraftfahrzeuges beschrieben. Damit eine Funktionsdiagnose stattfinden kann, muss zunächst der Motor gestartet werden, welches in Block 1 dargestellt ist. Eine Volllastlastdiagnose nach dem erfindungsgemäßen Verfahren, kann erst durchgeführt werden, wenn gewisse Einschaltbedingungen für den Volllastbereich erfüllt sind. Diese Einschaltbedingungen sind in Block 2 enthalten. Im folgenden Ausführungsbeispiel erfolgt eine Funktionsdiagnose der Ladungsbewegungsklappen im Volllastbereich, die insbesondere auch im oberen Teillastbereich durchführbar ist, wenn die Motortemperatur einen Wert von ca. 70°C bis 80°C erreicht hat. Eine Motorlast von 60% bis 80% sowie eine Mindestmotordrehzahl von ca. 3500-4000 Umdrehungen pro Minute müssen ebenfalls erreicht sein, welches in Block 3 überprüft wird. Des Weiteren muss in der vorliegenden Ausführungsform der Erfindung mindestens der zweite Motorgang eingelegt und die Fahrzeuggeschwindigkeit größer 0 sein. Sind alle diese Einschaltbedingungen (Freigabebedingungen) erfüllt, erfolgt eine Volllastdiagnose in Block 4. Falls eine der Freigabebedingungen nicht erfüllt ist, kommt es zu einer erneuten Überprüfung der Einschaltbedingungen in Block 2,3 im nächsten Fahrzeugbetriebszustand.

Während der Diagnose wird im ersten Schritt ein Istwert eines dem Motor zugeführten Luftmassenstroms gemessen, wobei die Ladungsbewegungsklappen für eine Offenstellung angesteuert sind. Im Anschluss folgt ein Vergleich des gemessenen Istwertes mit einem Sollwert (Block 4.1), der einen bestimmten Wert hat, welcher aus einem Motorkennfeld bestimmt werden kann. Hierbei ist zu beachten, dass die Messung des Istwertes erst erfolgen soll, wenn eine gewisse Einschwingzeit innerhalb des Systems erreicht ist. In Block 4.2 wird der Istwert mit dem Sollwert verglichen, wobei der Sollwert einen Toleranzbereich aufweist. Ein Fehler wird durch das erfindungsgemäße Verfahren erst dann detektiert, wenn der Istwert nicht innerhalb des Sollwerttoleranzbereiches liegt, welches in Block 5.1 und 5.2 dargestellt ist. In 5.1 liegt der Istwert außerhalb der Toleranzgrenzen, so dass das zu überprüfende System nicht OK (NOK) ist.

Liegt der Istwert innerhalb der Toleranzgrenzen (Block 5.3), erkennt das Verfahren, dass die Ladungsbewegungsklappen funktionsfähig sind (Block 5.4). Ist das System OK, startet die Volllastdiagnose wieder in Block 2.

Im Falle eines Fehlers werden in Block 6.1 Ersatzmaßnahmen eingeleitet, um zum einen den Motor vor Beschädigungen zu schützen und zum anderen eine weitere Fahrt für den Benutzer, beispielsweise zur Werkstatt, zu gewährleisten. Einer der Ersatzmaßnahmen kann sein, welches ebenfalls für die Leerlaufdiagnose gilt, den Zündwinkel sowie die Abgasrückführungsrate zu verändern. Im vorliegenden Ausführungsbeispiel wird ein Mittelwert der Zündwinkel sowie der Abgasrückführungsraten als Ersatzmaßnahme gewählt.

Wird bei dem Diagnosedurchlauf ein Fehler erkannt, wird ein Fehlerzähler mit einem Zählerinkrement inkrementiert, welches in Block 6.1 durchgeführt wird. Dies geschieht bei jedem fehlerhaften Durchlauf, bis ein applizierbarer Schwellenwert an Fehlereinträgen erreicht wird. Durch diese Fehlerentprellung wird sichergestellt, dass der Fehler permanent anliegt und nicht ein einmaliges Fehlerereignis oder eine evtl. Fehldiagnose zu einem Fehlereintrag führt.

Weiterhin wird bei einem diagnostizierten Fehler der Ladungsbewegungsklappen die Diagnose sofort wieder eingeleitet, mit Berücksichtigung der bereits erwähnten Einschaltbedingungen.

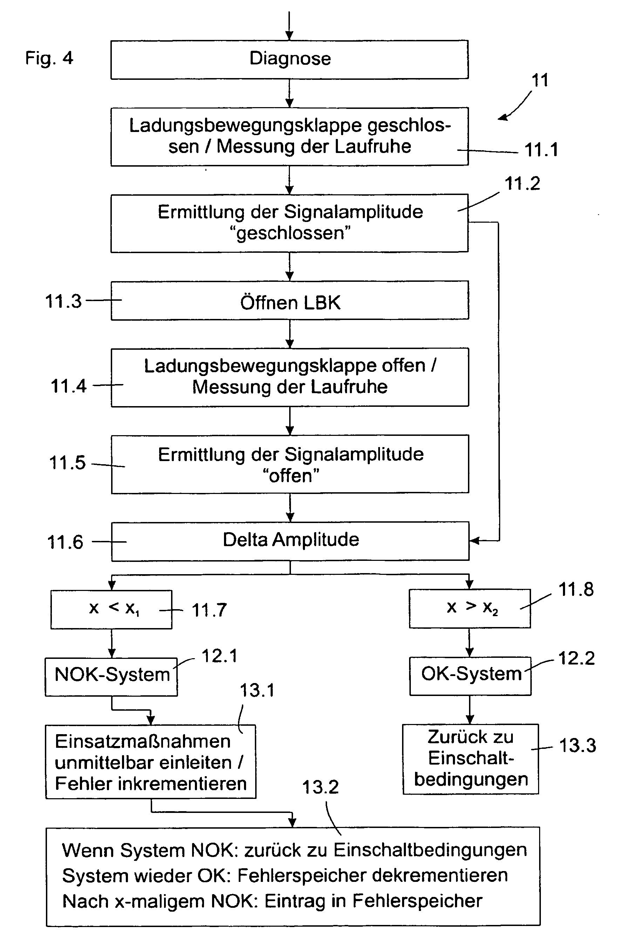

Diese Ausführungen, die in Block 6.2 durchgeführt werden, gelten ebenfalls für die Leerlaufdiagnose, insbesondere für den Block 13.2 in Figur 4.

Bei dem gemessenen Istwert handelt es sich um gemittelte und korrigierte Werte. Ferner wird die Funktionsdiagnose im Volllastbereich bei der dargestellten Ausführungsform kontinuierlich durchgeführt, wobei der Luftmassenstrom durch einen Durchflussmesser, insbesondere einen Heißfilm-Luftmassen-Durchflussmesser ermittelt wird, der zwischen dem Filter und der Drosselklappe des Motors angeordnet ist.

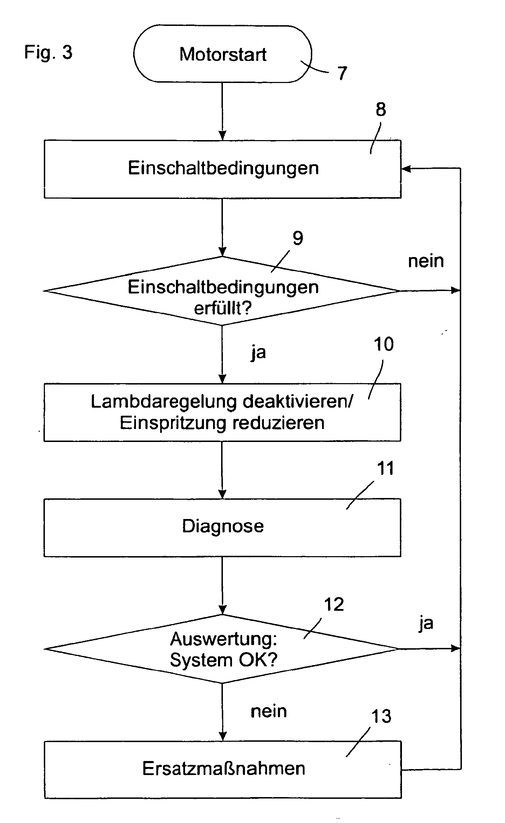

Bei der Leerlaufdiagnose, die in Figur 3 und Figur 4 dargestellt ist, werden in Block 8 zunächst die Einschaltbedingungen für einen Leerlauf überprüft. Damit eine zuverlässige Diagnose durchgeführt werden kann, muss die aktuelle Motortemperatur ungefähr über 70°C bis 80°C betragen. Neben einem betriebswarmen Motor ist im dargestellten Ausführungsbeispiel eine weitere Einschaltbedingung, dass die Fahrzeuggeschwindigkeit gleich 0 und der Motor sich im Leerlauf befindet. Diese Einschaltbedingungen, die in Block 8 hinterlegt sind, werden in Block 9 überprüft. Falls eine der Einschaltbedingungen nicht erfüllt ist, startet der Diagnoseablauf gemäß Figur 3 erneut in Block 8. Sind alle Einschaltbedingungen erfüllt, wird die Einspritzmenge, die gemäß des Motorkennfeldes für den Leerlaufbereich des Motors notwendig ist, um einen bestimmten Betrag reduziert. Des Weiteren wird gleichzeitig die Lamdaregelung deaktiviert, welches in Block 10 durchgeführt wird.

Anschließend wird ein Basiswert der Laufunruhe des Motors gemessen, wobei die Ladungsbewegungsklappen für eine Schließstellung angesteuert sind (Block 11.1). Bei dem Basiswert handelt es sich hierbei um eine ermittelte Signalamplitude (Block 11.2), die aus einer Vielzahl von Einzelbasiswerten besteht. Anschließend erfolgt in Block 11.3 eine Ansteuerung der Ladungsbewegungsklappen für eine Offenstellung. In Block 11.4 wird ein Prüfwert der Laufunruhe bei angesteuerten offenen Ladungsbewegungsklappen gemessen. Bei dem ermittelten Prüfwert handelt es sich ebenfalls um Signalamplituden (Block 11.5), die aus einer Vielzahl von Einzelprüfwerten besteht.

Anschließend erfolgt ein Vergleich des Basiswertes mit dem Prüfwert, um eine mögliche Fehlfunktion der Ladungsbewegungsklappen zu detektieren. Hierbei wird die Differenz zwischen Basiswert und Prüfwert ermittelt und somit ein Laufunruhedifferenzwert gebildet (Block 11.6). Im nächsten Schritt folgt ein Vergleich des Laufunruhedifferenzwertes mit einem Laufunruheschwellenwert, welches in Block 11.7 und Block 11.8 erfolgt.

Bei dem erfindungsgemäßen Diagnoseverfahren wird kein Fehler detektiert, wenn der Laufunruhedifferenzwert größer ist als der Laufunruheschwellenwert, welches in Block 11.8 der Fall ist. Hierbei erkennt das Verfahren, dass das System OK ist (Block 12.2), woraufhin anschließend die Leerlaufdiagnose in Block 8 von neuem startet.

Ist der Laufunruhedifferenzwert kleiner als der Laufunruheschwellenwert (Block 11.7), erkennt das Verfahren, dass ein Fehler bei der Funktion der Ladungsbewegungsklappen vorliegt (Block 12.1). Im Block 13.1 erfolgen die bereits für die Volllastdiagnose beschriebenen Ersatzmaßnahmen sowie die jeweilige Fehlerinkrementierung. Die in Block 13.2 durchzuführenden Maßnahmen entsprechen denen aus Block 6.2, worauf hier nicht mehr einzeln eingegangen wird.

Im Gegensatz zur Volllastdiagnose wird die Leerlaufdiagnose diskontinuierlich durchgeführt. Die Leerlaufdiagnose kann beispielsweise nach einer festgelegten Anzahl an Leerlaufzyklen (beispielsweise 20) oder nach einer festgelegten Zeit oder sofort nach einem zuvor diagnostizierten Fehler durchgeführt werden. Vorzugsweise wird die Einspritzmenge während der Leerlaufdiagnose soweit reduziert, dass ein dem Motor zugeführtes Kraftstoff-Luftgemisch von λ=1,08 bis λ=1,2 entsteht. Ein wesentlicher Punkt beim erfindungsgemäßen Verfahren ist, dass in der Leerlaufdiagnose das Kraftstoff-Luftgemisch magerer gemacht wird, um eine sichere Aussage machen zu können, ob eine Fehlfunktion der Ladungsbewegungsklappen vorliegt.

Bei einer lediglichen Messung des Basiswertes mit geschlossenen Ladungsbewegungsklappen und des Prüfwertes mit offenen Ladungsbewegungsklappen bei einer im Leerlaufbereich üblichen Einspritzmenge wäre der Verbrennungsprozess im Motor in beiden Ladungsbewegungsklappenzuständen ähnlich stabil, so dass eine Funktionsdiagnose nicht möglich wäre. Es hat sich gezeigt, dass ein Unterschied der Laufunruhe bzgl. beider Ladungsbewegungsklappenpositionen in diesem Fall kaum messbar ist. Um eine bessere Trennschärfe zu erzielen, wird die Einspritzmenge derart reduziert, dass das dem Motor zugeführte Kraftstoff-Luftgemisch zwischen λ=1,08 bis λ=1,2 liegt. Bei angesteuerter Ladungsbewegungsklappe in Schließstellung kann bereits ein gewisser, erhöhter Laufunruhewert gemessen werden (Basiswert). Durch eine Ansteuerung der Ladungsbewegungsklappen für eine Offenstellung hat sich ergeben, das sich eine größere Laufunruhe aufgrund der nicht vollständigen Verbrennung einstellt, die durch den Prüfwert erfasst wird. Aufgrund dieser Erkenntnis ist ein gut messbarer Laufunruhedifferenzwert messbar im Falle von funktionsfähiger Ladungsbewegungsklappen.

Die Leerlaufdiagnose ist in der Lage festzustellen, ob die Bewegungsklappen in der Schließstellung sich nicht mehr öffnen lassen und in der Offenstellung sich nicht mehr schließen lassen. Im Gegensatz dazu kann die Diagnose in Volllastbereich lediglich einen Fehler diagnostizieren, wenn die Ladungsbewegungsklappen sich aus einer Schließstellung nicht mehr öffnen lassen.

Bei der Diagnose im Leerlaufbereich ist es selbstverständlich möglich, die Ansteuerung der Ladungsbewegungsklappe für eine Offenstellung vor der Reduzierung der Einspritzmenge oder gleichzeitig mit dem Vorgang einer Reduzierung der Einspritzmenge durchzuführen.

## Patentansprüche

1. Verfahren zur Funktionsdiagnose mindestens einer Ladungsbewegungsklappe in einem Verbrennungsmotor eines Kraftfahrzeuges während des Betriebes des Verbrennungsmotors, umfassend
folgende Schritte im Leerlaufbereich des Motors:
a) Reduzieren der für einen Leerlaufbereich erforderlichen Einspritzmenge;
b) Messen eines Basiswertes der Laufunruhe des Motors, wobei die Ladungsbewegungsklappe für eine Schließstellung angesteuert ist;
c) Ansteuern der Ladungsbewegungsklappe für eine Offenstellung;
d) Messen eines Prüfwertes der Laufunruhe;
e) Vergleichen des Basiswertes und des Prüfwertes, um eine mögliche Fehlfunktion der Ladungsbewegungsklappe zu detektieren;
und
folgende Schritte im Volllast- und im Teillastbereich, insbesondere im oberen Teillastbereich des Motors:
f) Messen eines Istwertes eines dem Motor zugeführten Luftmassenstromes, wobei die Ladungsbewegungsklappe für eine Offenstellung angesteuert ist;
g) Vergleichen des Istwertes mit einem Sollwert, um eine mögliche Fehlfunktion der Ladungsbewegungsklappe zu detektieren.

2. Verfahren nach Anspruch 1, **dadurch gekennzeichnet, dass** in Schritt e) die Differenz zwischen Basiswert und Prüfwert ermittelt wird und somit ein Laufunruhedifferenzwert gebildet wird, wobei ein Fehler detektiert wird, wenn der Laufunruhedifferenzwert ungefähr gleich 0 ist.

3. Verfahren nach Anspruch 2, **dadurch gekennzeichnet, dass** der Laufunruhedifferenzwert mit einem Laufunruheschwellenwert verglichen wird, wobei kein Fehler detektiert wird, wenn der Laufunruhedifferenzwert größer ist als der Laufunruheschwellenwert.

4. Verfahren nach einem der genannten Ansprüche, **dadurch gekennzeichnet, dass** im Schritt g) der Sollwert einen Toleranzbereich aufweist und dann ein Fehler detektiert wird, wenn der Istwert nicht innerhalb des Sollwerttoleranzbereiches liegt.

5. Verfahren nach einem der genannten Ansprüche, **dadurch gekennzeichnet, dass** die Schritte f) und g) kontinuierlich durchgeführt werden, wobei Einschaltbedingungen für den Volllast- und den Teillastbereich erfüllt sein müssen.

6. Verfahren nach Anspruch 5, **dadurch gekennzeichnet, dass** die Einschaltbedingungen für eine Diagnose im Volllast- und den Teillastbereich die aktuelle Motorlast und/oder die Motordrehzahl und/oder die Fahrzeuggeschwindigkeit und/oder die Motortemperatur und/oder den eingelegten Gang und/oder den Luftmassenstrom umfassen.

7. Verfahren nach einem der genannten Ansprüche, **dadurch gekennzeichnet, dass** die Schritte a)-e) diskontinuierlich für den Leerlaufbereich durchgeführt werden, wobei Einschaltbedingungen für den Leerlaufbereich erfüllt sein müssen.

8. Verfahren nach Anspruch 7, **dadurch gekennzeichnet, dass** die Einschaltbedingungen für eine Diagnose im Leerlaufbereich die aktuelle Fahrzeuggeschwindigkeit und/oder der Betriebspunkt des Motors und/oder die Motortemperatur und/oder die Motordrehzahl und/oder die Tankentlüftungsaktivierung umfassen.

9. Verfahren nach einem der genannten Ansprüche, **dadurch gekennzeichnet, dass** die Schritte a)-e) durchgeführt werden
h) nach einer festgelegten Anzahl an Leerlaufzyklen
und/oder
i) nach einer festgelegten Zeit
und/oder
j) sofort nach einem zuvor diagnostizierten Fehler.

10. Verfahren nach einem der genannten Ansprüche, **dadurch gekennzeichnet, dass** der Luftmassenstrom im Schritt f) durch einen Durchflussmesser ermittelt wird.

11. Verfahren nach Anspruch 10, **dadurch gekennzeichnet, dass** der Durchflussmesser ein Volumendurchflussmesser, ein Staudruckdurchflussmesser oder ein Massendurchflussmesser ist.

12. Verfahren nach Anspruch 11, **dadurch gekennzeichnet, dass** der Massendurchflussmesser ein Heißfilm-Luftmassen-Durchflussmesser ist, der zwischen dem Filter und der Drosselklappe des Motors angeordnet ist.

13. Verfahren nach einem der genannten Ansprüche, **dadurch gekennzeichnet, dass** im Schritt b) so weit die Einspritzmenge reduziert wird, dass ein dem Motor zugeführtes Kraftstoff-Luftgemisch von λ=1,08 bis λ=1,2 entsteht.

14. Verfahren nach einem der genannten Ansprüche, **dadurch gekennzeichnet, dass** der Basiswert, der Prüfwert und der Istwert jeweils ein gemittelter Werte ist.

15. Verfahren nach einem der genannten Ansprüche, **dadurch gekennzeichnet, dass** die Laufunruhe über die Änderung der Kurbelwellenbeschleunigung ermittelt wird.

16. Steuereinheit derart ausgebildet, dass das Verfahren nach einem oder mehreren der vorhergehenden Ansprüche in der Steuereinheit ausführbar ist.

17. Kraftfahrzeug umfassend eine Steuereinheit und/oder ein Verfahren nach einem der vorhergehenden Ansprüche.

18. Computerprogramm-Produkt zur Ausführung des Verfahrens nach einem oder mehreren der vorhergehenden Ansprüche, **dadurch gekennzeichnet, dass** das Verfahren in einem in dem Computerprogramm-Produkt gespeicherten Programm integriert ist.

## Claims

1. Method for the functional diagnosis of at least one charge moving flap in a combustion engine of a motor vehicle during the operation of the combustion engine, including the following steps during the engine idling speed of the engine:
a. Reduction of the injection quantity needed for the engine idling speed;
b. Measurement of a basis value of the irregular running of the engine, wherein the charge moving flap is actuated for a locking position;
c. Actuation of the charge moving flap for an opening position;
d. Measurement of the check value of the irregular running;
e. Comparison of the basis value with the check value in order to detect the malfunction of the charge moving flap;
and
The following steps during the full charge and the partial charge area, primarily in the upper area of the partial charge of the engine:
a. Measurement of the actual value of an air mass stream conducted into the engine, wherein the charge moving flap is actuated for an opening position;
b. Comparison of the actual value with the must value in order to detect a possible malfunction of the charge moving flap.

2. Method according to claim 1, **characterized in that** the during step e) the difference between the basis value and the check value is determined and as a consequence an irregular running difference value is determined wherein an error is detected in case the irregular running difference value corresponds to 0.

3. Method according to claim 2, **characterized in that** the irregular running difference value is compared with an irregular running threshold limit value wherein no error is detected if the irregular running difference value is bigger than the irregular running threshold limit value.

4. Method according to one of the previous claims, **characterized in that** during step g) the must value shows a tolerance area and then an error is detected if the actual value does not lay within the must value tolerance area.

5. Method according to one of the previous claims, **characterized in that** the steps f) and g) are carried out on a continuous basis, wherein the cut-in conditions for the full charge area and the partial charge area must be implemented.

6. Method according to claim 5, **characterized in that** the cut-in conditions for a diagnosis in the full charge area and in the partial charge area comprehend the actual charge of the engine and/or the engine speed and/or the speed of the motor vehicle and/or the temperature of the engine and/or the engaged gear and/or the air mass stream.

7. Method according to one of the previous claims, **characterized in that** the steps a) - e) are carried out in a discontinuous way for the engine idling speed, wherein the cut-in conditions for the engine idling speed must be implemented.

8. Method according to claim 7, **characterized in that** the cut-in conditions for a diagnosis in the engine idling speed comprehend the actual speed of the motor vehicle and/or the operating point of the engine and/or the temperature of the engine and/or the engine speed and/or the activation of the tank ventilation.

9. Method according to one of the previous claims, **characterized in that** the steps a) - e) are carried out:
a. According to a determined amount of engine idling speed cycles and/or
b. According to a determined time and/or
c. Immediately after an error diagnosed before.

10. Method according to one of the previous claims, **characterized in that** the air mass stream during step f) is determined by a flow control unit.

11. Method according to claim 10, **characterized in that** the flow control unit is a volume flow control unit, a back pressure flow control unit or a mass flow control unit.

12. Method according to claim 11, **characterized in that** the mass flow control unit is a hot-film air mass flow control unit which is aligned between the filter and the throttle body of the engine.

13. Method according to one of the previous claims,
**characterized in that** during the step b) the injection amount is reduced so that a fuel-air ration conducted into the engine of λ = 1,08 to λ = 1,2 is formed.

14. Method according to one of the previous claims, **characterized in that** the basis value, the check value and the actual value are averaged values.

15. Method according to one of the previous claims, **characterized in that** the irregular running is determined through the change of the acceleration of the car crankshaft.

16. Control unit designed in such a manner that the method according to one or more than one of the previous claims can be executed in the control unit.

17. Motor vehicle comprising a control unit and/or a method according to one of the previous claims.

18. Computer program product to carry out a method according to one or more than one of the previous claims, **characterized in that** the method is integrated into a program memorized in a computer program product.

## Revendications

1. Méthode de diagnostic du fonctionnement d'un volet d'agitation dans un moteur à combustion d'un véhicule à moteur en cours de fonctionnement du moteur à combustion, comportant les étapes suivantes dans la plage du ralenti du moteur :
a. Réduction de la quantité nécessaire injectée pour une plage du ralenti;
b. Mesure d'une valeur de base en termes d'irrégularité de fonctionnement du moteur, étant donné que le volet d'agitation est commandé pour une position de fermeture;
c. Commande du volet d'agitation pour une position d'ouverture ;
d. Mesure d'une valeur de contrôle pour l'irrégularité de fonctionnement;
e. Comparaison entre la valeur de base et la valeur de contrôle pour pouvoir détecter un dysfonctionnement possible du volet d'agitation;
et
les étapes suivantes dans la plage pleine charge et dans la plage de charge partielle, en particulier dans la plage supérieure de charge partielle du moteur;
a. Mesure de la valeur réelle du débit massique d'air alimentant le moteur, étant donné que le volet d'agitation est commandé pour une position d'ouverture ;
b. Comparaison entre la valeur réelle et une valeur de consigne, pour pouvoir détecter un dysfonctionnement possible du volet d'agitation.

2. Méthode selon revendication 1, **caractérisée en ce que** la différence entre valeur de base et valeur de contrôle est déterminée en étape e) permettant ainsi de déterminer une valeur de différence d'irrégularité de fonctionnement, une erreur étant détectée, si la valeur de différence d'irrégularité de fonctionnement tend vers nul.

3. Méthode selon revendication 2, **caractérisée en ce que** la valeur de différence d'irrégularité de fonctionnement est comparée à une valeur seuil d'irrégularité de fonctionnement, aucune erreur n'étant détectée, si la valeur de différence d'irrégularité de fonctionnement est supérieure à la valeur seuil de cette dernière.

4. Méthode selon une des revendications mentionnées, **caractérisée en ce que** dans l'étape e) la valeur de consigne montre une plage de tolérance et une erreur sera alors détectée, si la valeur réelle ne se trouve pas dans la plage de tolérance de la valeur de consigne.

5. Méthode selon une des revendications mentionnées, **caractérisée en ce que** les étapes f) et g) sont effectuées de façon continuelle, les conditions de mise en marche pour la plage de charge pleine et la plage partielle devant être accomplies.

6. Méthode selon revendication 5, **caractérisée en ce que** les conditions de mise en marche pour une diagnostic dans la plage de charge pleine et la plage partielle comportent, la charge actuelle du moteur et/ou la vitesse du moteur et /ou la température du moteur et /ou la vitesse sélectée et /ou le débit massique d'air.

7. Méthode selon une des revendications mentionnées, **caractérisée en ce que** les étapes a) - e) sont effectuées pour la plage du ralenti, de façon discontinue, les conditions de mise en marche dans la plage du ralenti, devant être remplies.

8. Méthode selon revendication 7, **caractérisée en ce que** les conditions de mise en marche pour une diagnostic dans la plage de ralenti comportent, la vitesse actuelle du véhicule à moteur et /ou le point de fonctionnement du moteur et /ou la température du moteur et /ou la vitesse du moteur et/ ou l'activation de la ventilation du réservoir.

9. Méthode selon une des revendications mentionnées, **caractérisée en ce que** les étapes a) - e) sont effectuées
a. après un nombre bien déterminé de cycle au ralenti et/ ou
b. après un temps bien déterminé et/ ou
c. directement après une erreur diagnostiquée auparavant.

10. Méthode selon une des revendications mentionnées, **caractérisée en ce que** le débit massique d'air dans l'étape f) est mesuré à l'aide d'un débitmètre.

11. Méthode selon revendication 10, **caractérisée en ce que** le débitmètre est un débitmètre volumique, un débitmètre de pression dynamique ou bien un débitmètre massique

12. Méthode selon revendication 11, **caractérisée en ce que** le débitmètre est un débitmètre massique d'air à film chaud, qui est disposé entre le filtre et le volet d'étranglement du moteur.

13. Méthode selon une des revendications mentionnées, **caractérisée en ce que** dans l'étape b) la quantité injectée est tellement réduite, qu'un mélange air-carburant alimenté au moteur de λ = 1,08 jusqu'à λ = 1,2, est formé.

14. Méthode selon une des revendications mentionnées, **caractérisée en ce que** la valeur de base, la valeur de contrôle et la valeur réelle représentent chacune une valeur moyennée.

15. Méthode selon une des revendications mentionnées, **caractérisée en ce que** l'irrégularité de fonctionnement est déterminée à partir du changement d'accélération de rotation du vilebrequin.

16. Unité de commande est formée de telle manière, à ce que la méthode selon une ou plusieurs des revendications précédentes est réalisable au niveau de l'unité de commande

17. Véhicule à moteur comportant une unité de commande et /ou une méthode selon une des revendications précédentes.

18. Produit-software pour la réalisation de la méthode selon une ou plusieurs des revendications précédentes, **caractérisé en ce que** la méthode est intégrée dans un programme sauvegardé dans le produit-software.
